# FASCICULE DE BREVET EUROPEEN

(11) **EP 0 971 486 B1**
(45) Date de publication et mention de la délivrance du brevet: **19.10.2005**
(21) Numéro de dépôt: 99460043.5
(22) Date de dépôt: 18.06.1999
(51) Int. Cl.: H04B 7/10

(54) **Terminal mobile de radiocommunication comprenant au moins deux antennes présentant une diversité de polarisations pour la réception de signaux**
Mobiles Funkendgerät mit wenigstens zwei Antennen mit Polarisationsdiversität zum Empfang von Signalen
Mobile radio terminal comprising at least two antennas with polarization diversity for the reception of signals

(30) Priorité: 06.07.1998 FR 9808783
(43) Date de publication de la demande: 12.01.2000
(73) Titulaire: Société Française du Radiotéléphone-SFR, 75008 Paris (FR)
(72) Inventeur: Rémy, Jean-Gabriel, 94170 Le Perreux (FR)
(74) Mandataire: Vidon, Patrice

(56) Documents cités:
- EP-A- 0 600 547
- EP-A- 0 645 900
- EP-A- 0 831 598
- WO-A-97/28615
- WO-A-97/40588
- DE-A- 19 548 941
- GB-A- 1 222 518
- US-A- 5 606 733

## Description

Le domaine de l'invention est celui des systèmes de radiocommunication avec des mobiles.

Plus précisément, l'invention concerne les terminaux mobiles de radiocommunication compris dans de tels systèmes.

L'invention s'applique à tout terminal mobile de radiocommunication destiné à recevoir, et éventuellement émettre des signaux, et notamment, mais non exclusivement, dans des systèmes de radiocommunication de type GSM 900 (pour "Global System for Mobile" en anglais ou "Groupe spécial Systèmes Mobiles publics de radiocommunication fonctionnant dans la bande des 900 Mhz"), ou DCS 1800 (pour "Digital Cellular System 1800 Mhz" en anglais), ou PCS 1900 (pour "Personal Communication System 1900Mhz" en anglais), ou UMTS (pour "Universal Mobile Telecommunication System 2 GHz" en anglais), ou encore CDMA (pour "Coded Division Multiple Access" en anglais, ou "Accès Multiple à Répartition par Codes" en français).

On rappelle qu'un terminal mobile de radiocommunication est un équipement physique utilisé par un usager d'un réseau du système de radiocommunication pour accéder, via une station de base, aux services de télécommunication offerts.

On rappelle également qu'une station de base couvre une zone géographique donnée (ou cellule) dans laquelle peuvent se déplacer une pluralité de terminaux mobiles de radiocommunication avec lesquels la station de base peut échanger des signaux.

Selon les systèmes, le terminal mobile de radiocommunication est parfois appelé station mobile, téléphone portable, radiotéléphone mobile ou encore terminal de radiocommunication. Par souci de simplification, on emploie, dans la suite de ce document de brevet, l'expression "terminal mobile".

De façon classique, un terminal mobile comprend au moins une antenne destinée à recevoir et/ou émettre des signaux de et/ou vers une station de base.

Egalement de façon classique, on utilise une antenne de type "fouet" présentant une polarisation rectiligne.

D'une façon générale, on s'aperçoit que les signaux échangés entre le terminal mobile et la station de base peuvent subir des évanouissements (ou "fading" en anglais) et/ou des échos et/ou des interférences pouvant générer une perte partielle, voire totale, des informations véhiculées.

On rappelle que :
- les phénomènes d'évanouissement se produisent notamment lorsque deux signaux parviennent simultanément à une même antenne de réception avec des puissances similaires mais des phases opposées, le signal résultant étant donc quasiment nul ;
- les phénomènes d'échos sont notamment générés par des signaux émis qui "se réfléchissent" sur des obstacles rencontrés sur le chemin séparant un terminal mobile de la station de base correspondante ;
- les phénomènes d'interférences sont provoqués notamment lorsque des signaux de caractéristiques similaires (telles que la fréquence) sont mis en jeu dans un même milieu de propagation.

En d'autres termes, les signaux échangés font l'objet de perturbations dues notamment aux conditions de propagation -parfois difficiles- du milieu de transmission. On comprendra donc que de telles perturbations peuvent engendrer des problèmes cruciaux quant à la qualité de récupération des signaux émis par une station de base et destinés à un terminal mobile.

Ainsi, les signaux reçus par le terminal mobile sont parfois difficilement exploitables.

Par ailleurs, l'emplacement de l'antenne sur le terminal mobile est tel que son rayonnement se trouve en partie absorbé notamment par la tête d'un utilisateur qui maintient le terminal mobile proche de l'une de ses oreilles. Une telle proximité entre le terminal mobile et la tête de l'utilisateur entraîne par conséquent une diminution partielle des énergies reçue et émise par le terminal mobile.

Enfin, la qualité de réception du terminal mobile dépend généralement de la position du terminal mobile et/ou de son orientation par rapport à la station de base.

On connaît également, à travers les documents de brevet WO 97/40588, DE 195 48 941 et US 5 606 733, divers terminaux mettant en oeuvre une diversité de polarisation en réception grâce à l'utilisation de plusieurs antennes. Dans le premier document cité ci-dessus, les signaux reçus par les différentes antennes sont utilisés pour calculer une métrique de branche dans un décodeur de Viterbi

La présente invention a notamment pour objectif de pallier ces différents inconvénients de l'état de la technique.

Plus précisément, l'un des objectifs de la présente invention est de fournir un terminal mobile présentant une bonne qualité de réception, même dans des conditions difficiles (et notamment en présence de phénomènes d'évanouissement et/ou d'interférences et/ou d'échos).

Un autre objectif de l"invention est de fournir un tel terminal mobile permettant d'obtenir une réception sensiblement indépendante de la position et/ou de l'orientation du terminal mobile par rapport à la station de base.

Un objectif supplémentaire est de fournir un tel terminal mobile qui permette de ne pas modifier les signaux échangés tout en obtenant une bonne qualité de réception.

Ces différents objectifs, ainsi que d'autres qui apparaîtront par la suite, sont atteints selon l'invention à l'aide d'un terminal mobile de radiocommunication selon la revendication 1.

Le principe général de la présente invention repose donc sur l'association de plusieurs polarisations distinctes mises en oeuvre en mode réception.

On comprendra que la diversité de polarisations permet d'offrir plusieurs voies distinctes de réception, à savoir au moins certaine(s) relative(s) à la ou aux première(s) polarisation(s) et au moins certaine(s) relative(s) à la ou aux seconde(s) polarisation(s).

Ainsi, l'association de diverses polarisations permet d'augmenter la probabilité de réception correcte des signaux émis par la station de base. Cela se traduit notamment par un gain d'environ quelques dB en sensibilité de réception. L'augmentation de la probabilité de réception des signaux permet par conséquent au terminal mobile d'être beaucoup moins sensible aux phénomènes d'évanouissement et/ou d'interférences et/ou d'échos.

Il convient de noter que la diminution de l'influence notamment des phénomènes d'évanouissement sur la réception des signaux favorise une meilleure performance des algorithmes de contrôle de puissance (processus de Rayleigh ou Rice).

De ce fait, le terminal mobile selon l'invention peut travailler dans des conditions difficiles de propagation des signaux dans le milieu de transmission.

Il est à noter que les différentes voies de réception à polarisation distincte sont préférentiellement indépendantes et décorrelées entre elles, afin d'optimiser le traitement des signaux reçus par le terminal mobile. Il est clair que l'homme du métier saura mettre en oeuvre les différentes antennes, de façon que les différentes voies de réception générées soient indépendantes et décorrélées entre elles.

Ce sont précisément les moyens de combinaison des signaux reçus qui permettent de traiter, de manière optimale, les signaux reçus selon les différentes voies de réception possibles, afin de reconstruire, de la façon la plus fidèle possible, les signaux émis par la station de base.

On notera que le fait de présenter au moins une polarisation circulaire en association avec au moins une polarisation rectiligne permet au terminal mobile de recevoir des signaux qui lui sont destinés, de manière indépendante de sa position et/ou de son orientation par rapport à la station de base.

De façon avantageuse, ladite au moins une première antenne appartient au groupe comprenant :
- les antennes fouets ;
- les antennes panneaux.

Cette liste est bien sûr non limitative.

Préférentiellement, ladite au moins une seconde antenne appartient au groupe comprenant les antennes panneaux.

Cette liste n'est pas exhaustive.

Préférentiellement, ladite au moins une seconde antenne est mise en oeuvre selon une double polarisation, droite et gauche.

De cette façon, on obtient au total une diversité à trois polarisations distinctes (deux circulaires et une rectiligne). L'utilisation d'une telle double polarisation circulaire contribue à diminuer l'influence des phénomènes d'évanouissement et/ou d'interférences et/ou d'échos sur les signaux reçus par le terminal mobile.

Dans un mode de réalisation préférentiel de l'invention, ladite au moins une première antenne est également utilisée en émission.

Dans un mode de réalisation préférentiel de l'invention, lesdits moyens de combinaison des signaux reçus comprennent :
- pour chaque polarisation distincte, des moyens de décodage de Viterbi délivrant d'une part des signaux les plus vraisemblables, et d'autre part un coefficient de vraisemblance associé auxdits signaux les plus vraisemblables ;
- des moyens de traitement du signal numérique (ou "DSP" pour "Digital Signal Processor" en anglais) comprenant :
   - pour chaque polarisation distincte, des moyens de pondération pondérant les signaux les plus vraisemblables de chaque polarisation distincte par le coefficient de vraisemblance associé ;
   - des moyens de sommation des signaux issus des différents moyens de pondération.

De tels moyens de décodage de Viterbi permettent de déterminer, de la façon la plus vraisemblable, les informations véhiculées par les signaux reçus par le terminal mobile selon chacune des voies de réception. Les moyens de décodage de Viterbi, qui mettent en oeuvre l'algorithme du même nom, sont bien connus de l'homme du métier. Ils ne seront donc pas décrits ici.

Il est clair cependant que l'homme du métier saura mettre en oeuvre d'autres types de décodage sans sortir du cadre de la présente invention.

Ainsi, on peut traiter efficacement en bande de base les signaux reçus selon les différentes voies de réception, puisque les signaux issus des première et seconde antennes sont sommés en tenant compte de coefficients de pondération qui sont leurs coefficients respectifs de vraisemblance.

Selon une variante avantageuse, lesdits moyens de combinaison des signaux reçus comprennent :
- des moyens de sélection d'une polarisation, sélectionnant la polarisation dont les signaux reçus présentent la puissance maximale,
- des moyens de décodage de Viterbi recevant les signaux reçus selon la polarisation sélectionnée et délivrant d'une part les signaux reçus les plus vraisemblables, et d'autre part un coefficient de vraisemblance associé auxdits signaux reçus les plus vraisemblables.

De cette manière, seule la voie de réception, sur laquelle les signaux sont reçus avec la meilleure puissance, est préservée et traitée par les moyens de décodage de Viterbi, de façon optimale.

De façon préférentielle, ledit système de radiocommunication appartient au groupe comprenant :
- les systèmes du type GSM 900 ;
- les systèmes du type DCS 1800 ;
- les systèmes du type PCS 1900 ;
- les systèmes du type UMTS FDD ;
- les systèmes du type UMTS TDD ;
- les systèmes du type CDMA.

Cette liste n'est cependant pas exhaustive.

D'autres caractéristiques et avantages de l'invention apparaîtront à la lecture de la description suivante d'un mode de réalisation préférentiel de l'invention, donné à titre de simple exemple indicatif et non limitatif, et des dessins annexés, dans lesquels :
- la figure 1 présente un schéma synoptique simplifié d'un mode de réalisation particulier d'un terminal mobile selon l'invention :

- la figure 2 présente un schéma synoptique simplifié d'une variante de réalisation, par rapport à la figure 1, des moyens de combinaison des signaux reçus ; et
- la figure 3 présente un schéma simplifié d'un mode de réalisation particulier du terminal mobile de la figure 1.

De façon classique, un terminal mobile 10 mis en oeuvre dans un système de radiocommunication comprend notamment une antenne 110, une chaîne d'émission 12 et un micro-contrôleur 14. Le système de radiocommunication est par exemple du type GSM 900, DCS 1800, PCS 1900, UMTS FDD, UMTS TDD, CDMA, etc...

La chaîne d'émission 12 n'est pas décrite en détail, puisqu'elle est connue en soi, et peut être réalisée de très nombreuses manières. Dans cet exemple, la chaîne d'émission 12 comprend des moyens 121 nécessaires à l'émission de signaux par l'antenne 110 (classiquement conversion numérique/analogique, transfert dans la bande des radio-fréquences, filtrage, amplification, modulation...), des moyens 122 de codage notamment de la parole, du canal et des moyens 123 de traitement (entrelacement, ...). Le micro-contrôleur 14 pilote de manière connue en soi l'ensemble des opérations du terminal mobile 10, et assure notamment la restitution des signaux de parole via au moins un haut-parleur 15, et la récupération des signaux de parole issus d'au moins un micro-phone 16. Les signaux de parole ainsi que les signaux de signalisation générés par le terminal mobile 10 sont à émettre via la chaîne d'émission 12 vers une station de base (non représentée). Inversement, les signaux de parole et les signaux de signalisation transmis par la station de base sont reçus par le terminal mobile 10 via une chaîne de réception 13.

Selon l'invention, le terminal mobile 10 comprend, en réception :
- au moins une première antenne 110 présentant au moins une première polarisation;
- au moins une seconde antenne 111 présentant au moins une seconde polarisation, distincte de la première polarisation; et
- des moyens 132 de combinaison des signaux reçus, en diversité de polarisation, par les première et seconde antennes.

Un tel agencement de moyens 110, 111, 132 offre donc une diversité de polarisations en réception avec plusieurs voies de réception distinctes, indépendantes et décorrelées. Ceci est très intéressant car les moyens 132 de combinaison exploitent, de manière optimale, les signaux reçus. Il en résulte donc un gain de quelques dB en sensibilité de réception. On multiplie de ce fait les chances de réception des signaux émis à destination du terminal mobile 10. La réception des signaux par le terminal mobile 10 est en conséquence améliorée, et permet de mieux s'affranchir des phénomènes d'évanouissement et/ou d'interférences et/ou d'échos.

Par ailleurs, l'utilisateur du terminal mobile 10 génère moins de perturbations (absorption d'énergie, obstacle...), notamment pour la réception des signaux qui sont destinés à son terminal mobile 10.

On notera que l'invention est compatible notamment avec tout fonctionnement en "full duplex". On entend ici par fonctionnement en "full duplex", un fonctionnement permanent en émission et en réception sur chaque canal de fréquence.

La première antenne 110 présente en réception une première polarisation et assure au moins une première voie de réception. Cette première antenne est également utilisée en émission. On utilise donc, de façon optimale, les ressources disponibles pour émettre des signaux en direction d'une station de base.

La deuxième antenne 111 présente une deuxième polarisation distincte de la première polarisation. Il peut s'agir d'une polarisation circulaire ou d'une polarisation elliptique. Cette antenne 111 peut par exemple assurer au moins deux voies de réception supplémentaires selon une double polarisation. Ces deux voies de réception supplémentaires sont différentes, indépendantes et décorrélées de la première voie précitée.

La deuxième antenne 111 est par exemple mise en oeuvre selon une double polarisation, droite et gauche. Pour ce faire, on alimente la deuxième antenne panneau 111 par deux points 112 d'alimentation reliés à des moyens 113 de déphasage (ou réseau déphaseur).

Sur chacune des trois voies de réception, on prévoit de manière connue en soi des moyens 131 nécessaires au traitement radio des signaux reçus par les antennes 110 et 111 (classiquement amplification, filtrage, transfert en bande de base, conversion analogique/numérique...). Pour chaque polarisation distincte, ces moyens 131 délivrent des signaux 131s traités, à des moyens 132a de décodage de Viterbi.

Ces moyens 132a de décodage de Viterbi délivrent les plus vraisemblables des séquences de données véhiculées dans les signaux reçus ainsi que le coefficient de vraisemblance associé à un processeur 132b de signaux numériques (ou "DSP"). Ce processeur 132b comprend des moyens 133 de pondération et des moyens 134 de sommation. Pour chaque polarisation distincte, les moyens 133 de pondération pondèrent les signaux les plus vraisemblables de chaque polarisation distincte par le coefficient de vraisemblance associé délivré également par les moyens 132a de décodage de Viterbi.

Les différents moyens 133 de pondération délivrent les signaux les plus vraisemblables, pondérés par leur coefficient de vraisemblance respectif, aux moyens 134 de sommation. Ces moyens 134 de sommation somment les signaux issus des différentes polarisations, et délivrent au micro-contrôleur 14 les signaux traités de manière optimale.

Selon une variante de réalisation, on peut prévoir d'inclure dans les moyens 132 de combinaison un ASIC (pour "Application Specific Integrated Circuit" en anglais) à la place du DSP qui peut éventuellement assurer au moins certaines fonctions du micro-contrôleur 14.

On notera que l'invention permet d'agir efficacement contre les phénomènes d'évanouissement notamment. En conséquence, la performance des algorithmes de contrôle de puissance s'en trouve améliorée. Un tel contrôle de puissance est notamment avantageux pour les systèmes de type CDMA, UMTS FDD et UMTS TDD.

Les moyens 132 de combinaison délivrent des signaux combinés au micro-contrôleur 14. Ce micro-contrôleur 14 traite de manière connue en soi les signaux combinés à l'aide de la modulation adaptée au système de radiocommunication.

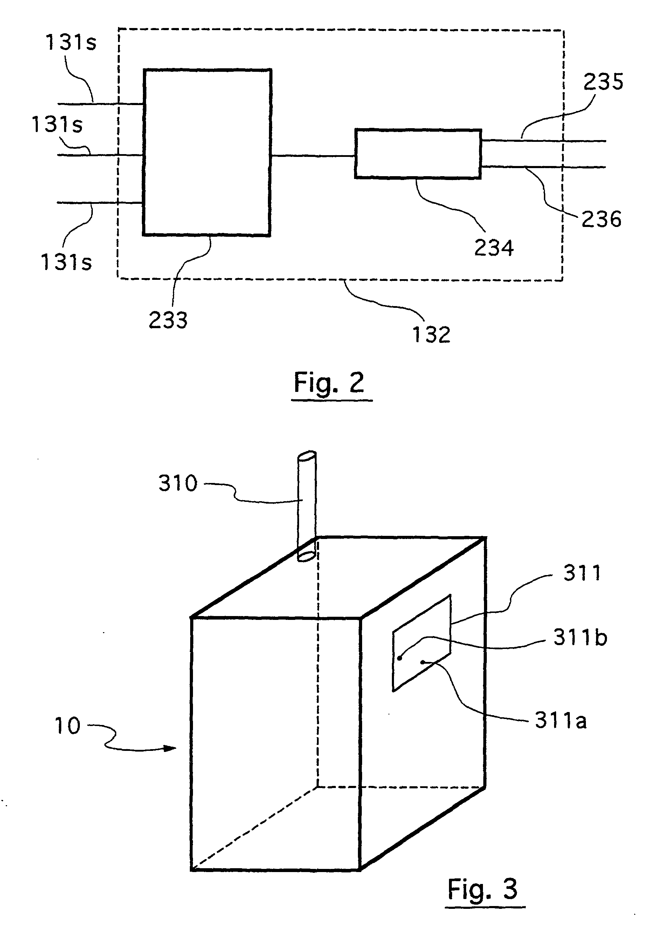

On présente maintenant, en relation avec le schéma de la figure 2, un second mode de réalisation particulier des moyens 132 de combinaison des signaux reçus.

Selon cette variante de réalisation, les moyens 132 de combinaison des signaux reçus comprennent des moyens 233 de sélection d'une polarisation et des moyens 234 de décodage de Viterbi.

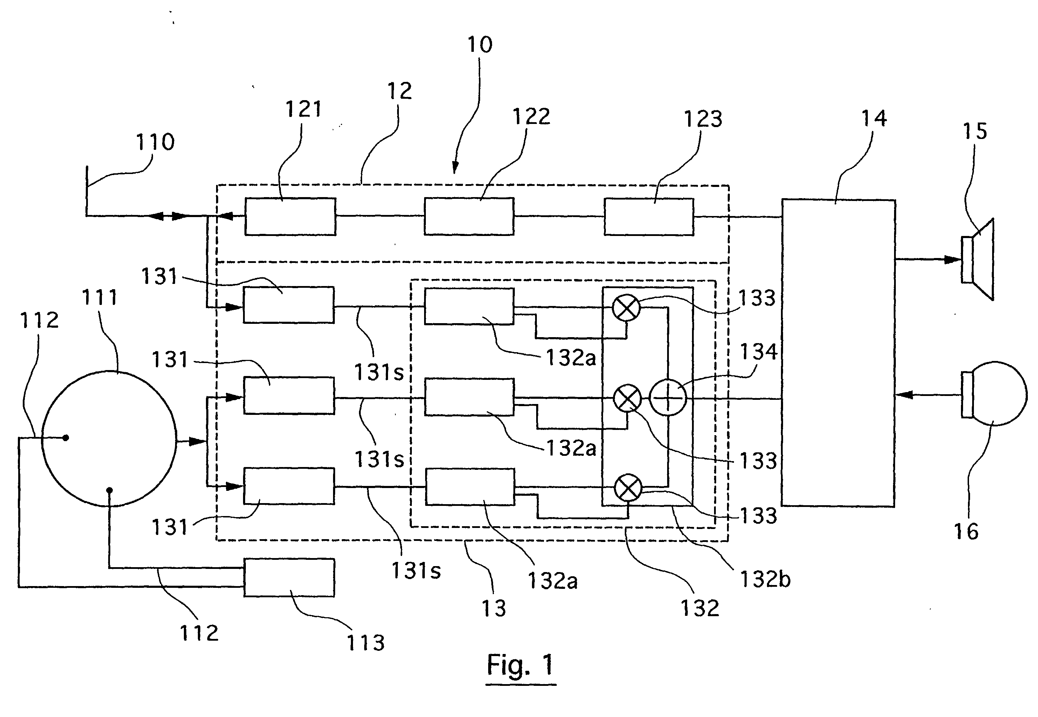

Les moyens 233 de sélection d'une polarisation sont alimentés par les signaux 131s issus des moyens 131 de traitement radio des signaux décrits précédemment (cf figure 1) avec une puissance de réception mesurée par et pour chaque voie de réception. Ces moyens 233 sélectionnent une voie de réception, parmi les différentes voies de réception des signaux, selon la puissance de réception la plus élevée des signaux reçus par les différentes voies de réception. Les moyens 233 de sélection délivrent les signaux reçus par la voie de réception la mieux captée aux moyens 234 de décodage de Viterbi. Selon ce second mode de réalisation, on effectue donc une sélection d'une seule voie de réception parmi les différentes voies de réception et non pas une combinaison des différentes voies de réception (cf figure 1), on parle, dans ce cas, de diversité de commutation.

Les moyens 234 de décodage de Viterbi délivrent d'une part les plus vraisemblables des séquences 235 de données véhiculées dans les signaux reçus selon la voie de réception sélectionnée, et d'autre part le coefficient 236 de vraisemblance associé, au micro-contrôleur 14 (cf figure 1).

On présente maintenant, en relation avec le schéma simplifié de la figure 3, un mode de réalisation particulier du terminal mobile selon l'invention.

Le terminal mobile 10 comprend une première et une seconde antennes 310 et 311.

La première antenne 310 est de type "fouet" et est utilisée en émission et en réception. Cette antenne 310 présente une première polarisation rectiligne en mode réception. Selon une variante de réalisation, on peut envisager une antenne de type "panneau" en tant que première antenne 310 en mode réception.

La seconde antenne 311 est de type "panneau". Ce type d'antenne est connu en soi et ne sera pas décrit plus en détail dans la présente description. Celle-ci est utilisée uniquement en réception. Elle présente une double polarisation circulaire, droite et gauche, au moyen d'une alimentation déphasée selon deux points d'alimentation 311a et 311b reliés à un réseau déphaseur.

Par conséquent, ce terminal mobile 10 offre, en réception, trois polarisations distinctes et décorrélées entre elles. En pratique, on observe une atténuation de quelques dizaines de dB (par exemple 30 dB) entre la polarisation droite et la polarisation gauche de la seconde antenne 311.

Les rayonnements générés par ces deux antennes 310 et 311 sont différents et n'interagissent pas ou peu.

Si nécessaire, on peut cependant utiliser au moins un écran électrique entre les deux antennes 310 et 311 pour limiter l'influence du rayonnement de l'une des antennes sur le rayonnement de l'autre antenne.

On notera qu'une polarisation rectiligne permet de capter les signaux, de manière plus large, qu'avec une polarisation circulaire. En pratique, on obtient, à l'aide d'une polarisation rectiligne, une couverture de l'ordre d'environ √2 fois supérieure à celle obtenue via une polarisation circulaire.

## Revendications

1. Terminal mobile (10) de radiocommunication du type mis en oeuvre dans un système de radiocommunication,
**caractérisé en ce qu'**il comprend :
- au moins une première antenne (110), utilisée en réception et présentant au moins une première polarisation ;
- au moins une seconde antenne (111), utilisée en réception et présentant au moins une seconde polarisation, distincte de ladite première polarisation ; et
- des moyens (132) de combinaison des signaux reçus, en diversité de polarisation, par lesdites première et seconde antennes (110) et (111), lesdits moyens (132) de combinaison des signaux reçus comprenant :
- pour chaque polarisation distincte, des moyens (132a) de décodage de Viterbi délivrant d'une part des signaux les plus vraisemblables, et d'autre part un coefficient de vraisemblance associé auxdits signaux les plus vraisemblables ;
- des moyens (132b) de traitement du signal numérique comprenant :
- pour chaque polarisation distincte, des moyens (133) de pondération pondérant les signaux les plus vraisemblables de chaque polarisation distincte par le coefficient de vraisemblance associé ;
- des moyens (134) de sommation des signaux issus des différents moyens de pondération.

2. Terminal mobile (10) de radiocommunication selon la revendication 1, **caractérisé en ce que** ladite première polarisation appartient au groupe comprenant les polarisations rectilignes.

3. Terminal mobile (10) de radiocommunication selon l'une quelconque des revendications 1 et 2, **caractérisé en ce que** ladite seconde polarisation appartient au groupe comprenant :
- les polarisations circulaires ;
- les polarisations elliptiques.

4. Terminal mobile (10) de radiocommunication selon l'une quelconque des revendications 1 à 3, **caractérisé en ce que** ladite au moins une première antenne (110) appartient au groupe comprenant :
- les antennes (310) fouets ;
- les antennes (311) panneaux.

5. Terminal mobile (10) de radiocommunication selon l'une quelconque des revendications 1 à 4, **caractérisé en ce que** ladite au moins une seconde antenne (111) appartient au groupe comprenant les antennes (311) panneaux.

6. Terminal mobile (10) de radiocommunication selon la revendication 5, **caractérisé en ce que** ladite au moins une seconde antenne (111) est mise en oeuvre selon une double polarisation circulaire, droite et gauche.

7. Terminal mobile (10) de radiocommunication selon l'une quelconque des revendications 1 à 6, **caractérisé en ce que** ladite au moins une première antenne (110) est également utilisée en émission.

8. Terminal mobile (10) de radiocommunication selon l'une quelconque des revendications 1 à 7, **caractérisé en ce que** ledit système de radiocommunication appartient au groupe comprenant :
- les systèmes du type GSM 900 ;
- les systèmes du type DCS 1800 ;
- les systèmes du type PCS 1900 ;
- les systèmes du type UMTS FDD ;
- les systèmes du type UMTS TDD ;
- les systèmes du type CDMA.

## Patentansprüche

1. Mobiles Funkkommunikationsterminal (10) von der Art, die in Funkkommunikationssystemen eingesetzt werden,
**dadurch gekennzeichnet, dass** es folgendes umfasst:
- mindestens eine für den Empfang genutzte erste Antenne (110), die mindestens eine erste Polarisierung aufweist;
- mindestens eine für den Empfang genutzte zweite Antenne (111), die mindestens eine zweite, von der ersten Polarisierung verschiedene, Polarisierung aufweist, und
- Mittel (132) zum Kombinieren der nach der Vielfalt der Polarisierungen von der ersten und der zweiten Antenne (110) und (111) empfangenen Signale, wobei diese Mittel (132) zum Kombinieren der empfangenen Signale folgendes umfassen:
- für jede verschiedene Polarisierung, Viterbi-Dekodiermittel (132a), die einerseits die wahrscheinlichsten Signale und andererseits einen mit diesen wahrscheinlichsten Signalen assoziierten Wahrscheinlichkeitskoeffizienten liefern;
- Mittel (132b) zum Verarbeiten des digitalen Signals, die folgendes umfassen:
- für jede verschiedene Polarisierung, Wichtungsmittel (133), welche die wahrscheinlichsten Signale einer jeden verschiedenen Polarisierung mit Hilfe des assoziierten Wahrscheinlichkeitskoeffizienten wichten;
- Mittel (134) zum Summieren der aus den verschiedenen Wichtungsmitteln kommenden Signale.

2. Mobiles Funkkommunikationsterminal (10) nach Anspruch 1,
**dadurch gekennzeichnet, dass** die erste Polarisierung zu der Gruppe gehört, welche die Linearpolarisationen umfasst.

3. Mobiles Funkkommunikationsterminal (10) nach einem der Ansprüche 1 oder 2,
**dadurch gekennzeichnet, dass** die zweite Polarisierung zu der folgendes umfassenden Gruppe gehört:
- Kreispolarisierungen;
- elliptische Polarisierungen.

4. Mobiles Funkkommunikationsterminal (10) nach einem der Ansprüche 1 bis 3,
**dadurch gekennzeichnet, dass** die mindestens eine erste Antenne (110) zu der folgendes umfassenden Gruppe gehört:
- Peitschenantennen (310);
- Paneelantennen (311).

5. Mobiles Funkkommunikationsterminal (10) nach einem der Ansprüche 1 bis 4,
**dadurch gekennzeichnet, dass** die mindestens eine zweite Antenne (111) zu der Gruppe gehört, welche die Paneelantennen (311) umfasst.

6. Mobiles Funkkommunikationsterminal (10) nach Anspruch 5,
**dadurch gekennzeichnet, dass** die mindestens eine zweite Antenne (111) nach einer doppelten, rechten und linken Kreispolarisierung, eingesetzt wird.

7. Mobiles Funkkommunikationsterminal (10) nach einem der Ansprüche 1 bis 6,
**dadurch gekennzeichnet, dass** die mindestens eine erste Antenne (110) ebenfalls beim Senden eingesetzt wird.

8. Mobiles Funkkommunikationsterminal (10) nach einem der Ansprüche 1 bis 7,
**dadurch gekennzeichnet, dass** das Funkkommunikationssystem zu der folgendes umfassenden Gruppe gehört:
- Systeme des Typs GSM 900;
- Systeme des Typs DCS 1800;
- Systeme des Typs PCS 1900;
- Systeme des Typs UMTS FDD;
- Systeme des Typs UMTS TDD;
- Systeme des Typs CDMA.

## Claims

1. Mobile radio communication terminal (10) of the type used in a radio communication system,
**characterized in that** it comprises:
- at least a first antenna (110), used for reception and having at least a first polarization;
- at least a second antenna (111), used for reception and having at least a second polarization distinct from the said first polarization; and
- means (132) for combining the signals received, in polarization diversity, by the said first and second antennae (110) and (111), the said means (132) for combining the received signals comprising:
- for each distinct polarization, Viterbi decoding means (132a) which deliver, on the one hand, the most probable signals, and, on the other hand, a probability factor associated with the said most probable signals;
- means (132b) for processing the digital signal, comprising:
- for each distinct polarization, weighting means (133) which weight the most probable signals of each distinct polarization with the associated probability factor;
- means (134) for summing the signals sent from the different weighting means.

2. Mobile radio communication terminal (10) according to Claim 1, **characterized in that** the said first polarization belongs to the group comprising rectilinear polarizations.

3. Mobile radio communication terminal (10) according to either of Claims 1 and 2, **characterized in that** the said second polarization belongs to the group comprising:
- circular polarizations;
- elliptical polarizations.

4. Mobile radio communication terminal (10) according to any one of Claims 1 to 3, **characterized in that** the said at least one first antenna (110) belongs to the group comprising:
- whip antennae (310);
- panel antennae (311).

5. Mobile radio communication terminal (10) according to any one of Claims 1 to 4, **characterized in that** the said at least one second antenna (111) belongs to the group comprising panel antennae (311).

6. Mobile radio communication terminal (10) according to Claim 5, **characterized in that** the said at least one second antenna (111) is used with a double circular polarization consisting of right-hand and left-hand polarization.

7. Mobile radio communication terminal (10) according to any one of Claims 1 to 6, **characterized in that** the said at least one first antenna (110) is also used for transmission.

8. Mobile radio communication terminal (10) according to any one of Claims 1 to 7, **characterized in that** the said radio communication system belongs to the group comprising:
- GSM 900 systems;
- DCS 1800 systems;
- PCS 1900 systems;
- UMTS FDD systems;
- UMTS TDD systems;
- CDMA systems.
